# EUROPÄISCHE PATENTSCHRIFT

(11) **EP 1 834 994 B1**
(45) Veröffentlichungstag und Bekanntmachung des Hinweises auf die Patenterteilung: **14.07.2010**
(21) Anmeldenummer: 06005240.4
(22) Anmeldetag: 15.03.2006
(51) Int. Cl.: C09B 67/08, C09B 67/02, C09D 11/00

(54) **Polyelektrolyt-verkapselte Pigmente**
Pigments encapsulated with polyelectrolytes
Pigments encapsulés avec des polyélectrolytes

(43) Veröffentlichungstag der Anmeldung: 19.09.2007
(73) Patentinhaber: Clariant Finance (BVI) Limited, Road Town, Tortola (VG)
(72) Erfinder: Metz, Hans Joachim, Dr., 64285 Darmstadt (DE); Plüg, Carsten, Dr., 64342 Seeheim Jugenheim Ober-Beerbach (DE); Mehltretter, Gerald, Dr., 65197 Wiesbaden (DE); Schweikart, Karl-Heinz, Dr., 65760 Eschborn (DE); Voigt, Andreas, Dr., 12621 Berlin (DE); Dähne, Lars, Dr., 12587 Berlin (DE); Kröhne, Lutz, 10439 Berlin (DE); Möschwitzer, Jan, 12247 Berlin (DE)
(74) Vertreter: Hütter, Klaus

(56) Entgegenhaltungen:
- EP-A- 0 972 563
- EP-A- 1 589 077
- EP-A2- 0 058 865
- WO-A-2006/066131
- GB-A- 955 283
- US-A1- 2004 229 974
- JUNJIE YUAN ET. AL.: "ORGANIC PIGMENT PARTICLES COATED WITH COLLOIDAL NANO-SILICA PARTICLES VIA LAYER-BY-LAYER ASSEMBLY" CHEMISTRY OF MATERIALS, AMERICAN CHEMICAL SOCIETY, WASHINGTON, DC, US, Bd. 17, Nr. 14, 2005, Seiten 3587-3594, XP008071479 ISSN: 1520-5002
- DATABASE WPI Week 198237 Derwent Publications Ltd., London, GB; AN 1982-77669E XP002417279 & JP 57 126857 A (SHISEIDO CO LTD) 6. August 1982 (1982-08-06)
- BRUGGEN VAN M P B: "Preparation and Properties of Colloidal Core-Shell Rods with Adjustable Aspect Ratios" LANGMUIR, ACS, WASHINGTON, DC, US, Bd. 14, Nr. 9, 31. März 1998 (1998-03-31), Seiten 2245-2255, XP002408227 ISSN: 0743-7463

## Beschreibung

Die vorliegende Erfindung betrifft polyelektrolyt-verkapselte Pigmente, deren Herstellung und deren Verwendung als Farbmittel insbesondere für Wasser- und lösungsmittelbasierende Tinten und Lacke.

Die Stabilität von Pigmentdispersionen in lösungsmittelhaltigen .und rein wässrigen Anwendungsmedien wie Drucktinten, Ink-Jet-Tinten, Mill-bases und Lacken wird unter anderem stark durch die Oberflächenladung der eingesetzten Pigmente beeinflusst. Für viele Zwecke ist es wünschenswert, die Oberflächenladung gezielt einzustellen, um damit die Fließfähigkeit, das Benetzungsverhalten, die Stabilität und Güte der Dispersion auf das jeweilige Bindemittelsystem anzupassen. Ein übliches Maß für die Charakterisierung von Partikeldispersionen bildet das Zeta-Potential, das mit der Oberflächenladung der Partikel und der geladenen Grenzschicht direkt verknüpft ist.

Anorganische Pigmente tragen aufgrund ihrer oxidischen oder sulfidischen Struktur zumeist eine leicht negative Oberflächenladung, die beispielsweise durch den oberflächlichen Einbau anderer Metallionen verändert werden kann.
Die Oberflächenladung von organischen Pigmenten ist meist gering und kann stark variieren, wobei die Pigmentklasse, das Substitutionsmuster und die jeweilige Kristallstruktur einen Einfluss haben. Dem Fachmann sind mehrere Wege bekannt, die Oberflächenladung von organischen Pigmenten zu variieren. Eine Möglichkeit liegt in der Verwendung von Additiven, die stark an die Pigmentoberfläche absorbieren und die selbst eine Ladung oder Partialladung tragen. Diese Additive können Polymere darstellen, die über Ankergruppen verfügen, die stark mit der Pigmentoberfläche wechselwirken. Alternativ sind auch Additive üblich, die ausgehend von einem Pigmentgrundkörper substituiert sind und somit besonders stark an der Pigmentoberfläche der jeweiligen Strukturklasse haften. Der Nachteil an diesen polymeren und pigmentbasierenden Additiven liegt darin, dass diese Stoffe meist spezifisch für einzelne Pigmente oder Pigmentklassen wirken und eine Einstellung der Oberflächenladung nur in einem engen Bereich möglich ist. Außerdem müssen diese Additive aufwendig hergestellt werden.

Eine allgemeine Methode, Polyelektrolyte auf bestimmte Feststoffpartikel aufzubringen, ist in WO 99/47252 beschrieben. Diese Schrift enthält jedoch keinerlei Hinweise, dass durch eine solche Verkapselung die anwendungstechnischen Eigenschaften von Pigmenten verbessert werden. Die Schrift erwähnt zwar die Einkapselung von Farbstoffen. Dieser Ausdruck bezieht sich jedoch auf lösliche Farbmittel, während Pigmente unlösliche Farbmittel darstellen.

WO 02/28660 beschreibt die Belegung von Partikeln mit Farbmittel enthaltenden Polyelektrolytschichen. Diese Materialien sind ausdrücklich als gut geeignet für Ink-Jet-Tinten beschrieben. Diese gute Eignung wird aber auf eine Verbesserung der Farbmittel hinsichtlich Abbaureaktionen durch Licht und anderer Einflüsse begrenzt. In dieser Schrift finden sich keinerlei Hinweise, dass Pigmente durch die Veränderung von Oberflächenladungen verbesserte Eigenschaften zeigen.

Yuan, J; Zhou, S.; You, B; Lu, L.; Chem. Mat. 2005, 117, 3587-3894 berichtet von der Belegung von Pigment Yellow 109 einer Teilchengröße von mehr als 480 nm mit Multischichten aus Poly(diallyldimethyl)ammoniumchlorid und Natrium Poly(4-styrylsulfonat) und nachträglicher Belegung mit nano-teiligen Siliziumdioxidpartikeln.

US-A-2004/229974 offenbart Ink-Jet-Tinten, die mit anionischen Gruppen ausgestaltete Pigmente enthalten, welche mit kationischen und anionischen Polyelektrolyten beschichtet sind.

In der JP-A-57 126857 werden Pigmentpartikel zunächst mit anionischen, dann mit kationischen hochmolekularen Komponenten beschichtet.

Auch in der GB-A-955 283 werden Lackpigmente zunächst anionisch, dann kationisch belegt. EP-A-0058 865 beschreibt Pigmentpräparationen, hergestellt durch Mischen einer Pigmentsuspension mit anionischen Polymeren sowie anionischen Surfactants und anschließendem Ausfällen mit Metallsalzen.

Besonders im Bereich der Ink-Jet-Druckverfahren sind pigmentbasierende Tintenformulierungen gewünscht, die ein brilliantes Druckbild mit einem problemlosen Druckvorgang verbinden.

Das Ink-Jet-Druckverfahren ist, wie zum Beispiel die Elektrophotographie (Laserdrucker und Kopierer), ein berührungsloses Druckverfahren (non impact printing process) und hat durch die zunehmende Verwendung von Computern vor allem im so genannten SOHO-Bereich (small office, home office), aber auch im so genannten Wide-Format-Bereich im Verlauf der letzten Jahre immer mehr an Bedeutung gewonnen.

Im Ink-Jet-Druck unterscheidet man zwischen den so genannten kontinuierlichen Druckverfahren und den Drop-on-Demand-Verfahren, wobei bei den letzteren Verfahren die Tintentropfen durch ein computergesteuertes elektrisches Signal erzeugt werden. Grundsätzlich lassen sich zwei Arten von Drop-on-Demand-Ink-Jet-Verfahren unterscheiden, der so genannte thermische Ink-Jet-Druck, auch als Bubble-Jet bezeichnet, und der piezoelektrische Ink-Jet-Druck.

Neben Farbstoffen werden in jüngster Zeit auch verstärkt Pigmente als Farbmittel in Ink-Jet-Tinten eingesetzt. An die pigmentierten Tinten für den Tintenstrahldruck werden dabei eine Reihe von Anforderungen gestellt: Sie müssen zum Drucken eine geeignete Viskosität und Oberflächenspannung aufweisen, sie müssen lagerstabil sein, d.h. sie sollen nicht aggregieren und das dispergierte Pigment soll sich nicht absetzen und sie dürfen nicht zu einer Verstopfung der Druckerdüsen führen.

Beim Ink-Jet-Druck werden außerdem sehr hohe Anforderungen insbesondere an die Farbstärke, den Farbton, die Brillianz, den Glanz, die Transparenz und an Echtheitseigenschaften, wie beispielsweise Lichtechtheit, Wasserechtheit und Reibeechtheit, der Ausdrucke gestellt. Insbesondere beim Drucken auf unbeschichtetem Papier (Plain Paper) ist es schwierig, eine hohe optische Dichte und einen guten Glanz zu erreichen. Diese Eigenschaften werden durch die Obertlächenladung der eingesetzten Pigmentpartikel maßgeblich bestimmt.
Die nach dem Stand der Technik bekannten Pigmente erfüllen die für den Ink-Jet-Druck geforderten Eigenschaften oftmals nicht.
Es bestand daher die Aufgabe, oberflächengeladene Pigmente zu finden, die die für den Ink-Jet-Druck erforderlichen Eigenschaften erfüllen.

Es bestand weiterhin die Aufgabe ein Verfahren zur Herstellung oberflächenmodifizierter Pigmente zu finden, das es erlaubt, die Oberflächenladung dieser Teilchen gezielt einzustellen. Dieses Verfahren sollte weitgehend unabhängig von der Klasse des verwendeten Pigments sein.

Überraschenderweise wurde gefunden, dass eine Verkapselung von Pigmenten mit Polyelektrolyt-Schichten diese Aufgaben löst.

Gegenstand der Erfindung ist ein Verfahren zur Verkapselung von Pigmentpartikeln, gekennzeichnet durch
(A) die Herstellung einer Dispersion des zu verkapselnden Pigments,
(B) die nachfolgende Aufbringung einer Polyelektrolytschicht auf die Oberfläche der Pigmentpartikel,
(C) die weitere Aufbringung einer zu (B) gegensätzlich geladenen Polyelektrolytschicht und/oder der Zugabe von zu (B) gegensätzlich geladenen niedermolekularen mehrwertigen Ionen und
(D) gegebenenfalls die Wiederholung der Schritte (B) und (C),
wobei die Schritte (B), (C) und gegebenenfalls (D) in Gegenwart eines nichtionischen Tensids durchgeführt werden.

(A): Die eingesetzte Pigmentdispersion kann durch übliche Methoden wie Mahlung, Ultraschallbehandlung oder Hochdruckhomogenisation erhalten werden und enthält zweckmäßigerweise ionische und/oder nichtionische Dispergier- und Netzmittel. Beispiele nichtionischer Tenside, die auch in den Schritten (B), (C) und (D) eingesetzt werden können, sind Alkyl- oder Arylalkoxylate, wie z.B. Alkoxylate von Ricinusötkoiophoniumestern, Fettalkoholen, Fettaminen, Fettsäuren oder Fettsäureamiden sowie Alkoxylierungsprodukte von Alkylphenolen bzw. deren oligo- oder polymere Derivate, z.B. Aldehyd-Kondensationsprodukte sowie Alkylpolyglucoside. Des Weiteren sind Alkoxylate von Styrol-Phenol Additionsprodukten wie z.B. 2,4,6-Tris-(1-phenylethyl)phenol sowie von Diglycerol- sowie Polyglycerolester langkettiger Säuren möglich. Ebenfalls können amphiphile Polymere oder Copolymere als Dispergierhilfsmittel verwendet werden, wie beispielsweise Block-Polymethacrylsäureester-Block-Polyethylenoxid-Copolymere, Block-Polystyrol-Block-Polyethylenoxid-Copolymere, Block-Polyethylenoxid-Block-Polypropylenoxid-Copolymere, Block-Polyethylendiamin-Block-Polyethylenoxid-Block- Polypropylenoxid-Copolymere, Polyvinylpyrrolidone oder Polyvinylalkohole.

Als ionische grenzflächenaktive Verbindungen eignen sich anionische und kationische Tenside. Zum Beispiel sind Tenside, die durch chemische Modifikation der nichtionischen Tenside erhältlich sind, Verbindungen mit den Gruppen -O-SO₃H, -SO₃H, -COOH, -O-PO(OH)₂, -O-PO(OH)-O-, -O-CO-CH=CH-COOH, -O-COCH(SO₃H)CH₂COOH, -COCH₂CH(SO₃H)COOH. Diese Tenside werden zweckmäßigerweise in Form der Alkalisalze, Ammoniumsalze und/oder der wasserlöslichen Aminsalze eingesetzt. Daneben können auch Sulfonate von alpha-Olefinen, Sulfonate von Polynaphthalenen, Ligninsulfonate, Dialkylsulfosuccinate sowie sulfatierte Fettsäuren bzw. Öle und deren Salze verwendet werden.
Außerdem eignen sich kationische Tenside beispielsweise aus der Gruppe der Alkyl- bzw. Arylammoniumsalze sowie zwitterionische Tenside oder mesoionische Tenside, wie z.B. Aminoxide.

Außerdem können polymere grenzflächenaktive Verbindungen als Dispergiermittel eingesetzt werden, beispielsweise Acrylatharz-Copolymere mit einer mittleren Molmasse Mᵥ zwischen 1000 und 50.000 g/mol, bestehend im Wesentlichen aus Monoalkenylaromaten und Acrylaten. Unter Monoalkenylaromaten werden insbesondere Monomere aus der Gruppe Styrol, α-Methyl-styrol, Vinyltoluol, tert.-Butyl-styrol, o-Chlor-styrol, sowie Gemische davon, verstanden. Unter Acrylaten werden Monomere aus der Gruppe Acrylsäure, Methacrylsäure sowie Ester der Acryl- oder Methacrylsäure verstanden. Beispiele sind: Methylmethacrylat, Ethylmethacrylat, n-Propylmethacrylat, n-Butylmethacrylat, Isopropyl-methacrylat, Isobutyl-methacrylat, n-Amyl-methacrylat, n-Hexyl-methacrylat, Iso-amyl-methacrylat, 2-Hydroxyethyl-methacrylat, 2-Hydroxypropyl-methacrylal, N,N-Dimethylaminoethylmethacrylat, N,N-Diethylaminoethyl-methacrylat, t-Butylaminoethyl-methacrylat, 2-Sulfoethyl-methacrylat, Trifluorethyl-methacrylat, Glycidyl-methacrylat, Benzyl- methacrylat, Allyl-methacrylat, 2-n-Butoxyethyl-methacrylat, 2-Chloroethyl-methacrylat, sec.-Butyl methacrylat, tert.-Butyl-methacrylat, 2-Ethylbutyl-methacrylat, Cinnamylmethacrylat, Crotyl-methacrylat, Cyclohexyl-methacrylat, Cyclopentyl-methacrylat, 2-Ethoxyethyl-methacrylat, Furfuryl-methacrylat, Hexafluorisopropyl-methacrylat, Methallyl-methacrylat, 3-Methoxybutyl-methacrylat, 2-Methoxybutyl-methacrylat, 2-Nitro-2-methylpropyl-methacrylat, n-Octylmethacrylat, 2-Ethylhexyl-methacrylat, 2-Phenoxyethyl-methacrylat, 2-Phenylethyl-methacrylat, Phenyl-methacrylat, Propargylmethacrylat, Tetrahydrofurfuryl-methacrylat und Tetrahydropyranyl-methacrylat.

(B) und (C): Das Aufbringen auf die Oberfläche gemäß Schritt (B) des erfindungsgemäßen Verfahrens erfolgt in der Dispersion gemäß (A) mit einem darin gelösten Polyelektrolytsalz durch Präzipitation, bei der um das Pigmentpartikel eine Hülle mit definierter Dicke meist im Bereich von 1 bis 150 nm, vorzugsweise 1 bis 100 nm, besonders bevorzugt 5 bis 50 nm und am meisten bevorzugt 10 bis 30 nm gebildet wird. Die Dicke und die Homogenität der Kapselhülle werden durch die Geschwindigkeit der Präzipitation des Polyelektrolyten bestimmt. Diese hängt im Wesentlichen von der Konzentration der Pigmentpartikel, der Konzentration der Beschichtungskomponenten und der Geschwindigkeit der die Präzipitation bewirkenden Löslichkeitsveränderung in der Flüssigkeitsphase ab.
Die Präzipitation kann beispielsweise dadurch erfolgen, dass ein Teil der die Hülle bildenden Komponenten in der Flüssigphase vorgelegt und anschließend eine oder mehrere weitere Hüllkomponenten zugegeben werden. Ein derartiger Präzipitationsschritt kann beispielsweise für eine Kombination von Metallkationen und entgegengesetzt geladenen Polyelektrolyten eingesetzt werden.
Eine andere Möglichkeit der Oberflächenpräzipitation besteht darin, dass die zur Bildung der Hülle erforderlichen Komponenten bereits vollständig in der Flüssigphase vorliegen und eine die Präzipitation bewirkende Veränderung der Flüssigphase erfolgt. Diese Veränderung der Flüssigphase kann beispielsweise in einer Elektrolytzugabe, z.B. anorganische Salze, oder/und pH-Variation, z.B. Zugabe eines Puffers, bestehen. Durch geeignete Wahl der Polyelektrolyte ist es möglich, die Eigenschaften und Zusammensetzung der Polyelektrolythülle definiert einzustellen, insbesondere in Hinblick auf die Oberflächenladung. Dabei kann die Zusammensetzung der Hüllen durch die Wahl der Substanzen beim Schichtaufbau in weiten Grenzen variiert werden. Grundsätzlich ergeben sich keine Einschränkungen hinsichtlich der zu verwendenden Polyelektrolyte, solange die verwendeten Moleküle eine genügend hohe Ladung aufweisen oder/und die Fähigkeit besitzen, über andere Wechselwirkungsarten, wie beispielsweise Wasserstoffbrückenbindungen und/oder hydrophobe Wechselwirkungen, eine Bindung mit der darunter liegenden Schicht einzugehen.

Besonders überraschend war, dass der Schritt (B), (C) und gegebenenfalls (D) in Anwesenheit nichtionischer Tenside besonders effizient und agglomeratfrei durchgeführt werden kann.
Weiterhin wurde gefunden, dass die Schritte (C) und (D) durch eine kontrollierte Oberflächenpräzipitation so optimiert werden können, dass mehrere Polyelektrolytschichten nacheinander ohne Zwischenisolierung auf die Pigmentpartikel aufgebracht werden können. Dies kann durch sukzessive Zugabe der Hüllkomponenten und Herbeiführung der Präzipitation durch Änderung der Elektrolytkonzentration und/oder des pH-Wertes geschehen. Dabei werden Polyelektrolytschichten auf den Pigmentpartikeln aufgebracht, die in ihrer Schutz- und Stabilisierungswirkung mit denjenigen einer Layer by layer-Technik vergleichbar sind.

Es können lineare oder verzweigte Polyelektrolyte eingesetzt werden. Die Verwendung verzweigter Polyelektrolyte kann zu weniger kompakten Polyelektrolytfilmen mit einem höheren Grad an Porosität führen. Zur Erhöhung der Kapselstabilität können Polyelektrolytmoleküle innerhalb oder/und zwischen den einzelnen Schichten vernetzt werden, z.B. durch Crosslinking von Aminogruppen mit Aldehyden. Weiterhin können amphiphile Polyelektrolyte, z. B. amphiphile Block- oder Randomcopolymere mit partiellem Polyelektrolytcharakter zur Verringerung der Permeabilität gegenüber polaren kleinen Molekülen eingesetzt werden. Solche amphiphilen Copolymere bestehen aus Einheiten unterschiedlicher Funktionalität, z.B. einerseits sauren oder basischen Einheiten und andererseits hydrophoben Einheiten wie Styrolen, Dienen oder Siloxanen, die als Blöcke oder statistisch verteilt über das Polymer angeordnet sein können. Durch Verwendung von Copolymeren, die als Funktion äußerer Bedingungen ihre Struktur ändern, können die Kapselwände bezüglich ihrer Oberflächenladung oder anderer Eigenschaften definiert gesteuert werden. Hierzu bieten sich beispielsweise schwache Polyelektrolyte, Polyampholyte oder Copolymere mit einem Poly(N-isopropylacrylamid)-Anteil, z.B. Poly(N-isopropylacrylamid-acrylsäure) an, die über das Gleichgewicht von Wasserstoffbrückenbindungen ihre Wasserlöslichkeit als Funktion der Temperatur ändern, was mit einer Quellung einhergeht.

In einer bevorzugten Ausführungsform kann die Verkapselung mit einem Komplex aus einem niedermolekularen Ion und einem entgegengesetzt geladenen Polyelektrolyten erfolgen. Beispiele für geeignete niedermolekulare Ionen sind mehrwertige Metallkationen, wie Erdalkalimetallkationen und Übergangsmetallkationen, anorganische Anionen, wie Sulfat, Carbonat, Phosphat, geladene Tenside, geladene Lipide und geladene Oligomere in Kombination mit einem entsprechend entgegengesetzt geladenen Polyelektrolyten. Hierbei wird eine verteilte Quelle für den einen Polyelektrolyten bei gleichzeitiger Anwesenheit des anderen Polyelektrolyten erzeugt. Der Polyelektrolyt des Komplexes kann sowohl das Polykation als auch das Polyanion sein. Die Wahl hängt von der Natur des verwendeten Pigmentes und den erwünschten Oberflächeneigenschaften ab. In dieser Ausführungsform wird beispielsweise ein positiv geladener Polyelektrolyt mit einem mehrfach negativ geladenen niedermolekularen Anion, z.B. Sulfat, zu einer Lösung des negativ geladenen Polyelektrolyten und einer Dispersion des Pigments gegeben, wobei eine Beschichtung der Pigmentpartikel stattfindet. Die beschichteten Pigmentpartikel können von den freien Komplexen beispielsweise durch Zentrifugation, Filtration und anschließendes Waschen oder Membranfiltration abgetrennt werden.

Noch eine weitere bevorzugte Ausführungsform umfasst die Oberflächenpräzipitation in einer Pigmentdispersion enthaltend lösliche, partiell destabilisierte Polyelektrolytkomplexe (Polykation/Polyanion) mittels Salzzugabe oder/und pH-Variation und/oder andere Destabilisierungsfaktoren. Hierbei erfolgt eine allmähliche Übertragung von Polyelektrolyten aus den Komplexen auf die Pigmentoberfläche. Hierzu können der negativ und der positiv geladene Polyelektrolyt in eine wässrige Lösung mit hohem Salzgehalt, vorzugsweise einem Salzgehalt von mehr als 0,5 Mol/l, z.B. 1 M NaCl, eingebracht und gerührt werden. Nach Zugabe der Pigmentpartikel werden diese beschichtet und können beispielsweise durch Zentrifugation oder Filtration und anschließendes Waschen gewonnen werden.

In noch einer weiteren bevorzugten Ausführungsform umfasst die Hülle Metallkationen und mindestens einen negativ geladenen Polyelektrolyten. Als Metallkationen kommen beispielsweise divalente Metallkationen und insbesondere trivalente Metallkationen zum Einsatz. Beispiele für geeignete Metallkationen sind Erdalkalimetallkationen, Übergangsmetallkationen und Seltenerdelementkationen, wie etwa Ca²⁺, Mg²⁺; Al³⁺, Y³⁺, Tb³⁺ und Fe³⁺.

Die Erfindung liefert beschichtete Partikel mit einem Kern, der ein organisches Pigment ist und eine mittlere Teilchengröße **d₅₀** von unter 200 nm, und mindestens zwei Polyelektrolytschichten unterschiedlicher Ladung in einer Schichtdicke von jeweils 1 bis 150 nm, vorzugsweise 1 bis 100 nm, besonders bevorzugt 5 bis 50 nm und am meisten bevorzugt 10 bis 30 nm, hat.

Vorzugsweise enthalten die beschichteten Partikel der vorliegenden Erfindung
(a.) 20 bis 99 Gew.-%, besonders bevorzugt 50 bis 99 Gew.-%, insbesondere 70 bis 99 Gew.-%, eines Kerns aus einem organischen Pigment,
(b.) 1 bis 80 Gew.-%, besonders bevorzugt 1 bis 50 Gew.-%, insbesondere 1 bis 30 Gew.-%, mindestens zweier Polyelektrolytschichten und
(c.) 0 bis 30 Gew.-%, vorzugsweise 0 bis 10 Gew.-%, beispielsweise 1 bis 20 Gew.-%, eines mehrwertigen, niedermolekularen Ions.

Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie zum Beispiel Phthalocyanin-, Chinacridon-, Perylen-, Perinon-, Thioindigo-, Anthanthron-, Anthrachinon-, Flavanthron-, Indanthron-; Isoviolanthcon-, Pyranthron-, Dioxazin-, Chinophthalon-, Isoindolinon-, Isoindolin- und Diketopyrrolopyrrol-Pigmente oder Ruße in Betracht.

Von den genannten organischen Pigmenten sind diejenigen besonders geeignet, deren anhand eines Blaumaßstabs ermittelte Lichtechtheit mit einer Note größer 5, insbesondere größer 6 beurteilt wird. Zudem sollten die für die Herstellung der Zubereitungen verwendeten Pigmente möglichst feinteilig sein. Die mittlere Teilchengröße d₅₀ liegt idealerweise bei einem Wert unter 200 nm, insbesondere zwischen 30 nm und kleiner als 200 nm, besonders bevorzugt zwischen 40 und 180nm.

Als beispielhafte Auswahl besonders bevorzugter organischer Pigmente sind dabei Rußpigmente, wie z.B. Gas- oder Furnaceruße; Monoazo- und Disazopigmente, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34 oder Pigment Brown 41; β-Naphthol- und Naphthol AS-Pigmente, insbesondere die Colour Index Pigmente Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38 oder Pigment Brown 1; verlackte Azo- und Metallkomplexpigmente, insbesondere die Colour Index Pigmente Pigment Red 48:2, Pigment Red 48:3, Pigment Red 48:4, Pigment Red 57:1, Pigment Red 257, Pigment Orange 68 oder Pigment Orange 70; Benzimidazolinpigmente, insbesondere die Colour Index Pigmente Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72 oder Pigment Brown 25; Isoindolinon- und Isoindolinpigmente, insbesondere die Colour Index Pigmente Pigment Yellow 139 oder Pigment Yellow 173; Phthalocyaninpigmente, insbesondere die Colour Index Pigmente Pigment Blue 15, Pigment Blue 15:1, Pigment Blue 15:2, Pigment Blue 15:3, Pigment Blue 15:4, Pigment Blue 16, Pigment Green 7 oder Pigment Green 36; Anthanthron-, Anthrachinon-, Chinacridon-, Dioxazin-, Indanthron-, Perylen-, Perinon- und Thioindigopigmente, insbesondere die Colour Index Pigmente Pigment Yellow 196, Pigment Red 122, Pigment Red 149, Pigment Red 168, Pigment Red 177**,** Pigment Red 179, Pigment Red 181, Pigment Red 207, Pigment Red 209, Pigment Red 263, Pigment Blue 60, Pigment Violet 19, Pigment Violet 23, Pigment Blue 80 oder Pigment Orange 43; Triarylcarboniumpigmente, insbesondere die Colour Index Pigmente Pigment Red 169, Pigment Blue 56 oder Pigment Blue 61; Diketopyrrolopyrrolpigmente, insbesondere die Colour Index Pigmente Pigment Red 254 zu nennen.

Erfindungsgemäß geeignete Polyelektrolyte können sowohl Polyanionen als auch Polybasen darstellen und sind sowohl Biopolymere, wie etwa Alginsäure, Gummi Arabicum, Nukleinsäuren, Pektine, Proteine und andere, sowie chemisch modifizierte Biopolymere, wie etwa ionische oder ionisierbare Polysaccharide, z.B. Carboxymethylcellulose, Chitosan und Chitosansulfat, Ligninsulfonate sowie synthetische Polymere, wie etwa Polymethacrylsäure, Polyvinylsulfonsäure, Polyvinylphosphonsäure und Polyethylenimin.

Geeignete Polyanionen umfassen natürlich vorkommende Polyanionen und synthetische Polyanionen. Beispiele für natürlich vorkommende Polyanionen sind Alginat, Carboxymethylamylose, Carboxymethylcellulose, Carboxymethyldextran, Carageenan, Cellulosesulfat, Chondroitinsulfat, Chitosansulfat, Dextransulfat, Gummi Arabicum, Gummi Guar, Gummi Gellan, Heparin, Hyaluronsäure, Pektin, Xanthan und Proteine bei einem entsprechenden pH-Wert. Beispiele für synthetische Polyanionen sind Polyacrylate (Salze der Polyacrylsäure), Anionen von Polyaminosäuren und deren Copolymeren, Polymaleinat, Polymethacrylat; Polystyrolsulfat, Polystyrolsulfonat, Polyvinylphosphat, Polyvinylphosphonat, Polyvinylsulfat, Polyacrylamidmethylpropansulfonat, Polylactat, Poly(butadien/maleinat), Poly(ethylen/maleinat), Poly(ethacrylat/acrylat) und Poly(glycerinmethacrylat).

Geeignete Polybasen umfassen natürlich vorkommende Polykationen und synthetische Polykationen. Beispiele für geeignete natürlich vorkommende Polykationen sind Chitosan, modifizierte Dextrane, z.B. Diethylaminoethyl-modifizierte Dextrane, Hydroxymethylcellulosetrimethylamin, Lysozym, Polylysin, Protaminsulfat, Hydroxyethylcellulosetrimethylamin und Proteine bei einem entsprechenden pH-Wert. Beispiele für synthetische Polykationen sind Polyallylamin, Polyallylaminhydrochlorid, Polyamine, Polyvinylbenzyltrimethylammoniumchlorid, Polybren, Polydiallyldimethylammoniumchlorid, Polyethylenimin, Polyimidazolin, Polyvinylamin, Polyvinylpyridin, Poly(acrylamid/methacryloxypropyl-trimethylammoniumbromid), Poly(diallyldimethylammoniumchlorid/N-isopropylacrylamid), Poly(dimethylaminoethylacrylat/acrylamid), Polydimethylaminoethylmethacrylat, Polydimethylamino-epichlorhydrin, Polyethyleniminoepichlorhydrin, Polymethacryloxyethyltrimethylammoniumbromid, Hydroxypropylmethacryl-oxyethyldimethylammoniumchlorid, Poly(methyldiethylaminoethylmethacrylat/ acrylamid), Poly(methyl/guanidin), Polymethylvinylpyridiniumbromid, Poly(vinylpyrrolidon-dimethylaminoethylmethacrylat) und Polyvinylmethylpyridiniumbromid.

Die beschichteten Partikel können als Farbmittel für Drucktinten, insbesondere für Ink-Jet-Tinten, elektrophotographische Toner, insbesondere Polymerisationstoner, Lacke, Pulverlacke und Farbfilter emgesetzt werden.

Die polyelektrolyt-verkapselten Pigmente können entweder in isolierter Form oder in Dispersion verwendet werden. Die Herstellung der Dispersion erfolgt zweckmäßigerweise mit resultierenden Pigmentgehalten von mindestens 8 Gew.-%, bevorzugt mindestens 10 Gew.-%, um diese Dispersionen direkt zur Tintenformulierung zu verwenden. Nach der Verkapselung kann nach jedem Teilschritt (B), (C) oder (D) eine Abtrennung von niedermolekularen Verbindungen oder nicht umhüllenden Polyelektrolyten erfolgen. Hierzu kommt zweckmäßigerweise eine Membranfiltration der Dispersion oder eine Isolierung des Pigments durch Zentrifugation oder Filtration und nachfolgendes Waschen zum Einsatz.

Die erfindungsgemäßen polyelektrolyt-verkapselten Pigmente zeichnen sich durch eine hohe Stabilität aus. Viele Pigmente fördern beim Ink-Jet-Verfahren ein Verstopfen der Düsen des Druckkopfes (nozzle clogging), das zu einem schlechten Druckverhalten führt. Ein solcher Ausfall einzelner Düsen wird bei Einsatz der erfindungsgemäßen polyelektrolyt-verkapselten Pigmente nicht beobachtet, was einen streifenfreien und damit gleichmäßigen Druck ermöglicht.

Die erfindungsgemäßen polyelektrolyt-verkapselten Pigmente werden vorzugsweise als Farbmittel in Ink-Jet-Tinten auf wässriger und nichtwässriger Basis, in Mikroemulsionstinten sowie in solchen Tinten, die nach dem Hot-Melt-Verfahren arbeiten, verwendet.

Gegenstand der Erfindung sind weiterhin Ink-Jet-Tinten gemäß Anspruch 7.

Mikroemulsionstinten basieren auf organischen Lösemitteln, Wasser und ggf. einer zusätzlichen hydrotropen Substanz (Grenzflächenvermittler). Mikroemulsionstinten enthalten im Allgemeinen 0,5 bis 30 Gew.-%, vorzugsweise 1 bis 15 Gew.-%, der erfindungsgemäßen polyelektrolyt-verkapselten Pigmente, 5 bis 99 Gew.% Wasser und 0,5 bis 94,5 Gew.-% organisches Lösungsmittel und/oder hydrotrope Verbindung. "Solvent based" Ink-Jet-Tinten enthalten vorzugsweise 0,5 bis 30 Gew.-% der erfindungsgemäßen polyelektrolyt-verkapselten Pigmente, 85 bis 99,5 Gew.-% organisches Lösungsmittel und/oder hydrotrope Verbindungen. Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60°C und ca. 140°C liegt. Hot-Melt Ink-Jet-Tinten bestehen z.B. im Wesentlichen aus 20 bis 90 Gew.-% Wachs und 1 bis 10 Gew.-% der erfindungsgemäßen polyelektrolyt-verkapselten Pigmente. Weiterhin können 0 bis 20 Gew.-% eines zusätzlichen Polymers, bis 5 Gew.-% . Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.

In den Ink-Jet-Tinten können die erfindungsgemäßen polyelektrolyt-verkapselten Pigmente auch mit anderen Farbmitteln wie beispielsweise anorganische oder organische Pigmente und/oder Farbstoffe nuanciert sein. Sie werden dabei in Tintensets, bestehend aus gelben, magenta, cyan und schwarzen Tinten, welche als Farbmittel Pigmente und/oder Farbstoffe enthalten, verwendet. Des Weiteren können sie in Tintensets verwendet werden, die zusätzlich eine oder mehrere der so genannten "spot colors" in den Farben beispielsweise orange, grün, blau, golden und silber enthalten.
Bevorzugt ist dabei ein Satz von Drucktinten, dessen schwarze Präparation bevorzugt Ruß als Farbmittel enthält, insbesondere einen Gas- oder Furnaceruß; dessen Cyan-Präparation bevorzugt ein Pigment aus der Gruppe der Phthalocyanin-, Indanthronoder Triarylcarboniumpigmente enthält, insbesondere die Colour Index Pigmente Pigment Blue 15, Pigment Blue 15:1, Pigment Blue 15:2, Pigment Blue 15:3, Pigment Blue 15:4, Pigment Blue 16, Pigment Blue 56, Pigment Blue 60 oder Pigment Blue 61; dessen Magenta-Präparation bevorzugt ein Pigment aus der Gruppe der Monoazo-, Disazo-, β-Naphthol, Naphthol AS-, verlackten Azo-, Metallkomplex-, Benzimidazolon-, Anthanthron-, Anthrachinon-, Chinacridon-, Dioxazin-, Perylen-, Thioindigo-, Triarylcarbonium- oder Diketopyrrolopyrrolpigmente enthält, insbesondere die Colour Index Pigmente Pigment Red 2, Pigment Red 3, Pigment Red 4, Pigment Red 5, Pigment Red 9, Pigment Red 12, Pigment Red 14, Pigment Red 38, Pigment Red 48:2, Pigment Red 48:3, Pigment Red 48:4, Pigment Red 53:1, Pigment Red 57:1, Pigment Red 112, Pigment Red 122, Pigment Red 144, Pigment Red 146, Pigment Red 147, Pigment Red 149, Pigment Red 168, Pigment Red 169, Pigment Red 170, Pigment Red 175, Pigment Red 176, Pigment Red 177, Pigment Red 179, Pigment Red 181, Pigment Red 184, Pigment Red 185, Pigment Red 187, Pigment Red 188, Pigment Red 207, Pigment Red 208, Pigment Red 209, Pigment Red 210, Pigment Red 214, Pigment Red 242, Pigment Red 247, Pigment Red 253, Pigment Red 254, Pigment Red 255, Pigment Red 256, Pigment Red 257, Pigment Red 262, Pigment Red 263, Pigment Red ,264, Pigment Red 266, Pigment Red 269, Pigment Red 270, Pigment Red 272, Pigment Red 274, Pigment Violet 19, Pigment Violet 23 oder Pigment Violet 32; dessen Gelb-Präparation bevorzugt ein Pigment aus der Gruppe der Monoazo-, Disazo- , Benzimidazolin-, Isoindolinon-, Isoindolin- oder Perinonpigmente enthält, insbesondere die Colour Index Pigmente Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 120, Pigment Yellow 126, Pigment Yellow 127, Pigment Yellow 128, Pigment Yellow 139, Pigment Yellow 151, Pigment Yellow 154, Pigment Yellow 155, Pigment Yellow 173, Pigment Yellow 174, Pigment Yellow 175, Pigment Yellow 176, Pigment Yellow 180, Pigment Yellow 181, Pigment Yellow 191, Pigment Yellow 194, Pigment Yellow 196, Pigment Yellow 213 oder Pigment Yellow 219 ; dessen Orange-Präparation bevorzugt ein Pigment aus der Gruppe der Disazo-, β-Naphthol-, Naphthol AS-, Benzimidazolon- oder Perinonpigmente enthält, insbesondere die Colour Index Pigmente Pigment Orange 5, Pigment Orange 13, Pigment Orange 34, Pigment Orange 36, Pigment Orange 38, Pigment Orange 43, Pigment Orange 62, Pigment Orange 68, Pigment Orange 70, Pigment Orange 71, Pigment Orange 72, Pigment Orange 73, Pigment Orange 74 oder Pigment Orange 81; dessen Grün-Präparation bevorzugt ein Pigment aus der Gruppe der Phthalocyaninpigmente enthält, insbesondere die Colour Index Pigmente Pigment Green 7 oder Pigment Green 36.

Zusätzlich können die Tintensets noch Nuancierfarbstoffe enthalten, vorzugsweise aus der Gruppe C.I. Acid Yellow 17 und C.I. Acid Yellow 23; C.I. Direct Yellow 86, C.I. Direct Yellow 98 und C.I. Direct Yellow 132; C.I. Reactive Yellow 37; C.I. Pigment Yellow 17, C.I. Pigment Yellow 74, C.I. Pigment Yellow 83, C.I. Pigment Yellow 97, C.I. Pigment Yellow 120, C.I. Pigment Yellow 139, C.I. Pigment Yellow 151, C.I. Pigment Yellow 155 und C.I. Pigment Yellow 180; C.I. Direct Red 1, C.I. Direct Red 11, C.I. Direct Red 37, C.I. Direct Red 62, C.I. Direct Red 75, C.I. Direct Red 81, C.I. Direct Red 87, C.I. Direct Red 89, C.I. Direct Red 95 und C.I. Direct Red 227; C.I. Acid Red 1, C.I. Acid Red 8, C.I. Acid Red 80, C.I. Acid Red 81, C.I. Acid Red 82, C.I. Acid Red 87, C.I. Acid Red 94, C.I. Acid Red 115, C.I. Acid Red 131, C.I. Acid Red 144, C.I. Acid Red 152, C.I. Acid Red 154, C.I. Acid Red 186, C.I. Acid Red 245, C.I. Acid Red 249 und C.I. Acid Red 289; C.I . Reactive Red 21, C.I. Reactive Red 22, C.I. Reactive Red 23, C.I. Reactive Red 35, C.I. Reactive Red 63, C.I. Reactive Red 106, C.I. Reactive Red 107, C.I. Reactive Red 112, C.I. Reactive Red 113, C.I. Reactive Red 114, C.I. Reactive Red 126, C.I. Reactive Red 127, C.I. Reactive Red 128, C.I. Reactive Red 129, C.I. Reactive Red 130, C.l. Reactive Red 131, C.I. Reactive Red 137, C.I. Reactive Red 160, C.l. Reactive Red 161, C.l. Reactive Red 174 und C.l . Reactive Red 180.

Die erfindungsgemäßen polyelektrolyt-verkapselten Pigmente eignen sich zur Herstellung von Tinten für den Einsatz in allen konventionellen Ink-Jet-Druckern, insbesondere für solche, die auf dem Bubble-Jet- oder Piezo-Verfahren beruhen.

Außer zum Bedrucken von Papier, natürlichen oder synthetischen Fasermaterialien, Folien oder Kunststoffen können die erfindungsgemäßen polyelektrolyt-verkapselten Pigmente zum Bedrucken verschiedenster Arten von beschichteten oder unbeschichteten Substratmaterialien verwendet werden, so z.B. zum Bedrucken von Pappe, Karton, Holz und Holzwerkstoffen, metallischen Materialien, Halbleitermaterialien, keramischen Materialien, Gläsern, Glas- und Keramikfasern, anorganischen Werkstoffen, Beton, Leder, Lebensmitteln, Kosmetika, Haut und Haaren. Das Substratmaterial kann dabei zweidimensional eben oder räumlich ausgedehnt, d.h. dreidimensional gestaltet sein und sowohl vollständig oder nur teilweise bedruckt oder beschichtet werden.

Die erfindungsgemäßen polyelektrolyt-verkapselten Pigmente sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des weiteren sind die erfindungsgemäßen polyelektrolyt-verkapselten Pigmente geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.

Weiterhin sind die erfindungsgemäßen polyelektrolyt-verkapselten Pigmente auch als Farbmittel für Farbfilter, sowohl für die additive wie auch für die subtraktive Farberzeugung, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder light-emitting diodes sein können, sowie als Farbmittel für elektronische Tinten ("electronic inks" bzw. "e-inks") oder "electronic paper" ("e-paper") geeignet. Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z.B. TFT-LCD = Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einem pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Außerdem eignen sich die erfindungsgemäßen polyelektrolyt-verkapselten Pigmente für die Pigmentierung von Anstrich- und Dispersionsfarben, Dispersionslacken, für Druckfarben, beispielsweise Textildruck-, Flexodruck-, Dekordruck- oder Tiefdruckfarben, für Tapetenfarben, für wasserverdünnbare Lacke, für Holzschutzsysteme, für Viskose-Spinnfärbung, für Lacke, für Wurstdärme, für Saatgut, für Glasflaschen, für die Massefärbung von Dachziegeln, für Putze, für Holzbeizen, für Buntstiftminen, Faserschreiber, Tuschen, Pasten für Kugelschreiber, Kreiden, Wasch- und Reinigungsmittel, Schuhpflegemittel, Einfärbung von Latex-Produkten, Schleifmitteln sowie zum Einfärben von Kunststoffen und hochmolekularen Materialien.

In den folgenden Beispielen bedeuten Prozentangaben Gewichtsprozente und Teile Gewichtsteile, sofern nicht anders angegeben.

Ein wesentliches Merkmal der nachfolgenden Beispiele besteht darin, dass während der Beschichtung ein nichtionisches Tensid angewendet wird. Damit kann der Partikelgrößenzuwachs durch Aggregation bei der Beschichtung unter Kontrolle gehalten werden, so dass die entstandenen polyelektrolyt-verkapselten Pigmente eine für die Anwendung geeignete Partikelgröße, Oberflächenladung und Dispersionsstabilität zeigen.

### Herstellung von polyelektrolyt-verkapselten Pigmenten mittels Layer by layer Technologie:

### Beispiel 1:

### Beschichtungen von C.l . Pigment Blue 15:3 beginnend mit einer kationischen Schicht

### Beispiel 1a: Herstellung der Pigmentdispersion:

Ein Gemisch aus 50 Teilen C.l . Pigment Blue15:3, 13,5 Teilen eines Ethylenoxid-Propylenoxid-Copolymers (Pluronic™ F68, BASF), 1. Teil Natriumdodecylsulfat und 435,5 Teilen entmineralisiertem Wasser werden mit einem Ultra-TurraX™ vordispergiert und anschließend mit einem Hochdruckhomogenisator solange dispergiert, bis die Teilchengrößenverteilung konstant ist.

### Beispiel 1 b: Beschichtung mit einer kationischen Schicht von Polyallylaminhydrochlorid (PAH):

Zu der aus Beispiel 1a erhaltenen Pigmentdispersion werden 2000 Teile einer 1,0%igen Lösung von PAH (15.000 g/mol, 0,05M Acetatpuffer pH 5.6, 0,2M NaCl) gegeben und das Gemisch 20 min bei Raumtemperatur gerührt. Die beschichteten Pigmentpartikel werden anschließend durch Zentrifugation abgetrennt und zweimal mit 500 Teilen entmineralisiertem Wasser gewaschen.

### Beispiel 1 c: Beschichtung mit einer kationischen Schicht aus Polydiallyldimethyl-ammoniumchlorid (PDADMAC):

Die aus Beispiel 1a erhaltene Pigmentdispersion wird mit 2000 Teilen einer tensidhaltigen 1,0 gew.-%igen PDADMAC-Lösung (0,1 Gew.-% Pluronic™ F68, 0,05M Acetatpuffer pH 5.6, 0,2M NaCI) versetzt und 20 min bei Raumtemperatur gerührt. Die beschichteten Pigmentpartikel werden anschließend durch Zentrifugation abgetrennt und zweimal mit 500 Teilen entmineralisiertem Wasser gewaschen.

### Beispiel 1d: Beschichtung mit einer anionischen Schicht von Polystyrolsulfonsäure (PSS):

Die aus Beispiel 1b erhaltene Pigmentzubereitung wird in 440 Teilen entmineralisiertem Wasser dispergiert und mit 2000 Teilen einer tensidhaltigen 0,5 gew.-%igen Polystyrolsulfonsäure-Lösung (70.000 g/mol, 0,1 Gew.-% Pluronic™ F68, 0,05M Acetatpuffer pH 5.6, 0,2M NaCl) versetzt und 20 min bei Raumtemperatur gerührt. Die beschichteten Pigmentpartikel werden anschließend durch Zentrifugation abgetrennt und zweimal mit 500 Teilen entmineralisiertem Wasser gewaschen.

### Beispiel 1 e: Beschichtung mit einer anionischen Schicht von Polystyrolsulfonsäure (PSS):

Die aus Beispiel 1c erhaltene Pigmentzubereitung wird in 440 Teilen entmineralisiertem Wasser dispergiert und mit 2000 Teilen einer tensidhaltigen 0,5 gew.-%igen Polystyrolsulfonsäure-Lösung (70.000 g/mol, 0,1 Gew.-% Pluronic™ F68, 0,05M Acetatpuffer pH 5.6, 0,2M NaCl) versetzt und 20 min bei Raumtemperatur gerührt. Die beschichteten Pigmentpartikel werden anschließend durch Zentrifugation abgetrennt und zweimal mit 500 Teilen entmineralisiertem Wasser gewaschen.

### Beispiel 1f: Beschichtung mit einer kationischen Schicht aus PAH:

Die aus Beispiel 1d erhaltene Pigmentzubereitung wird mit 2000 Teilen einer tensidhaltigen 1,0 gew.-%igen PAH-Lösung (15.000g/mol, 0,1 Gew.-% Pluronic^{TM} F68, 0,05M Acetatpuffer pH 5.6, 0,2M NaCI) versetzt und 20 min bei Raumtemperatur gerührt. Die beschichteten Pigmentpartikel werden anschließend durch Zentrifugation abgetrennt und zweimal mit 500 Teilen entmineralisiertem Wasser gewaschen.

### Beispiel 1 g (Vergleich): Beschichtung mit einer kationischen Schicht aus Polydiallyldimethyl-ammoniumchlorid (PDADMAC):

Die aus Beispiel 1e erhaltene Pigmentzubereitung wird mit 2000 Teilen einer 1,0 gew.-%igen PDADMAC-Lösung (0,05M Acetatpuffer pH 5.6, 0,2M Nacl) versetzt und 20 min bei Raumtemperatur gerührt. Die beschichteten Pigmentpartikel werden anschließend durch Zentrifugation abgetrennt und zweimal mit 500 Teilen entmineralisiertem Wasser gewaschen.

**Tabelle 1: Dispersionen von einem Teil (verkapseltem) C.I. Pigment Blue 15:3 in 9 Teilen entmineralisiertem Wasser**

| | Zetapotential (mV) | Teilchengröße d₅₀ (mittels PCS in nm) |
|---|---|---|
| Beispiel 1a | -54 | 164 |
| Beispiel 1b | +32 | 254 |
| Beispiel 1c | + 22 | 403 |
| Beispiel 1d | - 47 | 287 |
| Beispiel 1e | - 48 | 298 |
| Beispiel 1f | + 40 | 285 |
| Beispiel 1g | +41 | 2832 |

| | | |
|---|---|---|
| PCS = Photon Correlation Spectroscopy | | |

Die Tabelle 1 zeigt, dass durch die schichtweise Verkapselung von C.l . Pigment Blue 15:3 das Zetapotential und damit die Oberflächenladung stark beeinflusst wird. Somit können Werte in einem weiten Bereich gezielt eingestellt werden. Ohne nichtionisches Tensid entstehen um den Faktor 10 größere Teilchen (Beispiel 1g).

### Beispiel 2:

### Zweischichtverkapseiung von C.l . Pigment Yellow 213 beginnend mit einer kationischen Schicht

### Beispiel 2a: Herstellung der Pigmentdispersion:

Ein Gemisch aus 50 Teilen C.I. Pigment Yellow 213, 13,5 Teilen Pluronic™ F68, 1 Teil Natriumdodecylsulfat und 435,5 Teilen entmineralisiertem Wasser werden mit einem Ultra-TurraX^{™} vordispergiert und anschließend mit einem Hochdruckhomogenisator solange dispergiert, bis die Teilchengrößenverteilung konstant ist.

### Beispiel 2b: Beschichtung mit einer kationischen Polyelektrolytschicht von Polyallylaminhydrochlorid (PAH):

Zu der aus Beispiel 2a erhaltenen Pigmentdispersion werden 2000 Teile einer 1,0 gew.-%igen PAH-Lösung (15.000 g/mol, 0,05M Acetatpuffer pH 5.6, 0,2M NaCl) gegeben und das Gemisch 20 min bei Raumtemperatur gerührt. Die beschichteten Pigmentpartikel werden anschließend durch Zentrifugation abgetrennt und zweimal mit 500 Teilen entmineralisiertem Wasser gewaschen.

### Beispiel 2c: Beschichtung mit einer kationischen Polyelektrolytschicht von Eudragit E:

Zu der aus Beispiel 2a erhaltenen Pigmentdispersion werden 2000 Teile einer 0,1 gew.-%igen Acrylat-Copolymer-(Eudragit E)-Lösung (0,1% Pluronic™ F68, 0,2M NaCl, pH 4.6) gegeben und das Gemisch 20 min bei Raumtemperatur gerührt. Die beschichteten Pigmentpartikel werden anschließend durch Zentrifugation abgetrennt und zweimal mit 500 Teilen entmineralisiertem Wasser gewaschen.

### Beispiel 2d: Beschichtung mit einer anionischen Schicht von Polystyrolsulfonsäure (PSS):

Die aus Beispiel 2b erhaltene Pigmentzubereitung wird in 440 Teilen entmineralisiertem Wasser dispergiert und mit 2000 Teilen einer tensidhaltigen 0,5 gew.-%igen Polystyrolsulfonsäure-Lösung (70.000 g/mol, 0,1 Gew.-% Pluronic^{™} F68, 0,05M Acetatpuffer pH 5.6, 0,2M NaCl) versetzt und 20 min bei Raumtemperatur gerührt. Die beschichteten Pigmentpartikel werden anschließend durch Zentrifugation abgetrennt und zweimal mit 500 Teilen entmineralisiertem Wasser gewaschen.

### Beispiel 2e: Beschichtung mit einer anionischen Schicht von Polstyrolsulfonsäure (PSS):

Die aus Beispiel 2c erhaltene Pigmentzubereitung wird in 440 Teilen eritmineralisiertem Wasser dispergiert und mit 2000 Teilen einer tensidhaltigen 0,5 gew.-%igen Polystyrolsulfonsäure-Lösung (70.000 g/mol, 0,1 Gew.-% Pluronic^{™} F68, 0,05M Acetatpuffer pH 5.6, 0,2M Nacl) versetzt und 20 min bei Raumtemperatur gerührt. Die beschichteten Pigmentpartikel werden anschließend durch Zentrifugation abgetrennt und zweimal mit 500 Teilen entmineralisiertem Wasser gewaschen.

**Tabelle 2:**

| Dispersionen von einem Teil (verkapseltem) C.I. Pigment Yellow 213 in 9 Teilen entmineralisiertem Wasser | | |
|---|---|---|
| | Zetapotential (mV) | Teilchengröße d₅₀ mittels PCS (nm) |
| Beispiel 2a | -60 | 146 |
| Beispiel 2b | + 45 | 184 |
| Beispiel 2c | + 25 | 229 |
| Beispiel 2d | - 46 | 255 |
| Beispiel 2e | - 52 | 293 |

Die Tabelle 2 zeigt, dass durch die schichtweise Verkapselung von C.I. Pigment Yellow 213 das Zetapotential und damit die Oberflächenladung stark beeinflusst wird. Somit können Werte in einem weiten Bereich gezielt eingestellt werden.

### Beispiel 3:

### Polyelektrolytbeschichtung von C.l. Pigment Blue 15:3 beginnend mit einer anionischen Polyelektrolytschicht

### Beispiel 3a: Beschichtung mit einer anionischen Schicht von Polystyrolsulfonsäure (PSS):

Zu der aus Beispiel 1 a erhaltenen Pigmentdispersion werden 2000 Teile einer tensidhaltigen 0,1 gew.-%igen Polyelektrolytlösung PSS (70.000 g/mol, 0,05M Acetatpuffer pH 5.6, 0,2M NaCl) gegeben und das Gemisch 20 min bei Raumtemperatur gerührt. Die beschichteten Pigmentpartikel werden anschließend durch Zentrifugation abgetrennt und zweimal mit 500 Teilen entmineralisiertem Wasser gewaschen.

### Beispiel 3b: Beschichtung mit einer kationischen Polyelektrolytschicht von Eudragit E:

Die aus Beispiel 3a erhaltene Pigmentzubereitung wird in 440 Teilen entmineralisiertem Wasser dispergiert und mit 2000 Teilen einer 0.1 gew.-%igen Eudragit E-Lösung (pH 4,7, 0,2M NaCl) und mit 0.1 GeW.-% Pluronic™ F68 versetzt und das Gemisch 20 min bei Raumtemperatur gerührt. Die beschichteten Pigmentpartikel werden anschließend durch Zentrifugation abgetrennt und zweimal mit 500 Teilen entmineralisiertem Wasser gewaschen.

**Tabelle 3:**

| Dispersionen von einem Teil (verkapseltem) C.I. Pigment Blue 15:3 in 9 Teilen entmineralisiertem Wasser | | |
|---|---|---|
| | Zetapotential (mV) | Teilchengröße d₅₀ mittels PCS (nm) |
| Beispiel 1 a | - 54 | 164 |
| Beispiel 3a | - 49 | 222 |
| Beispiel 3b | + 20,5 | 320 |

Die Tabelle 3 zeigt, dass durch die schichtweise Verkapselung von C.I. Pigment Blue 15:3 das Zetapotential und damit die Oberflächenladung stark beeinflusst wird. Somit können Werte in einem weiten Bereich gezielt eingestellt werden.

Beurteilung der anwendungstechnischen Eigenschaften der erfindungsgemäßen Pigmentzubereitungen

### Herstellung von Dispersionen für den Ink-Jet-Druck:

### Anwendungsbeispiel 1: Pigmentdispersion aus C.I. Pigment Blue 15:3:

Eine Dispersion wird erhalten durch Dispergierung einer Pigmentzubereitung nach Beispiel 1e in entionisiertem Wasser, enthaltend 10,5 Gew.-% C.I. Pigment Blue 15:3.

### Anwendungsbeispiel 2: Pigmentdispersion aus C.I. Pigment Yellow 213:

Eine Dispersion wird erhalten durch Dispergierung einer Pigmentzubereitung nach Beispiel 2e in entionisiertem Wasser, enthaltend 9,2 Gew.-% C.I. Pigment Yellow 213. Vergleichsbeispiele:

In den folgenden Beispielen wird das Pigment zusammen mit den nachstehend genannten Dispergiermitteln, dem organischen Lösemittel und den anderen Zusätzen in entmineralisiertem Wasser angeteigt und dann mit einem Dissolver vordispergiert. Die anschließende Feindispergierung erfolgt unter Kühlung mit Hilfe einer Perlmühle über einen Zeitraum von 2 Stunden. Im Anschluss wird die Dispersion mit entmineralisiertem Wasser auf die gewünschte Pigmentendkonzentration von 20 % eingestellt, wobei 100 Teile der jeweiligen Dispersion entstehen und Teile Gewichtsteile bedeuten.

### Vergleichsbeispiel 1: Pigmentdispersion basierend auf Styrolacrylat und C.I. Pigment Blue 15:3, nichtverkapselt:

| | |
|---|---|
| 20 Teile | C.I. Pigment Blue 15:3 |
| 2,5 Teile | Acrylatharz, Na-Salz(Dispergiermittel) |
| 1,2 Teile | Polyethylenglykolalkylether, Na-Salz (Dispergiermittel) |
| 1 Teil | Benetzungsmittel |
| 25 Teile | Glykol |
| 0,2 Teile | Konservierungsmittel |
| Rest | Wasser |

### Vergleichsbeispiel 2: Pigmentdispersion basierend auf anionischem Tensid und C.I. Pigment Yellow 213, nichtverkapselt:

| | |
|---|---|
| 20 Teile | C.I. Pigment Yellow 213 |
| 2 Teile | anionisches Tensid (Dispergiermittel) |
| 2 Teile | Disperbyk™ 190 (Dispergiermittel) |
| 5 Teile | Glykol |
| 0,2 Teile | Konservierungsmittel |
| Rest | Wasser |

### Prüfung der drucktechnischen Eigenschaften der Pigmentzubereitungen

### Herstellung von Testtinten:

Um die drucktechnischen Eigenschaften zu beurteilen, wurden ausgehend von den Dispersionen der Anwendungsbeispiele 1 und 2 und der Vergleichsbeispiele 1 und 2 Testtinten hergestellt und deren Verdruckbarkeit mit einem thermischen Ink-Jet-Drucker untersucht.

Für die Herstellung der Testtinten wurden die Dispersionen zunächst über einen 1 µm-Filter feinfiltriert, um Mahlkörperabrieb und eventuelle Grobanteile abzutrennen. Danach wurden die filtrierten Dispersionen mit Wasser verdünnt und mit weiteren niedermolekularen Alkoholen und Polyolen versetzt, wobei der Pigmentgehalt auf 5 Gew.-% bezogen auf die Tinte (100 Gew.-%) eingestellt wurde.

### Viskosität:

Die für den Ink-Jet-Druck geeigneten Tinten müssen eine Reihe von physikalischen Eigenschaften erfüllen. So ist es erforderlich, dass sie eine möglichst geringe Viskosität (vorzugsweise < 5 mPas) aufweisen, um ein Verstopfen der Druckerdüsen zu vermeiden und ein gleichmäßiges Druckbild zu erzeugen.
Die Viskosität wurde mit einem Kegel-Platte-Viskosimeter (RS 1) der Firma Haake bestimmt (Titankegel: 0 60 mm, 1°). Die in Tabelle 4 genannten Viskositätswerte wurden bei einer Schergeschwindigkeit von 60 s⁻¹ gemessen.

Mit dem Drucker 960c (Hewlett Packard) wurden Testbilder auf handelsübliche Normalpapiere (Kopierpapiere) und Spezialpapiere (Premium Qualität) gedruckt. Die Beurteilung bzgl. Qualität und Güte des Druckbildes erfolgte durch visuelle Betrachtung.

### Beurteilung der Optischen Dichte:

Zur Beurteilung der optischen Dichte wurden die Testtinten mit dem Drucker HP 960c im Vollflächendruck auf unbeschichtetes Papier der Firma DataCopy gedruckt und die optische Dichte mit Hilfe eines Spektralphotometers der Firma GretagMacBeth gemessen. Die Ergebnisse sind in Tabelle 4 zusammengestellt.

**Tabelle 4: Viskositäten und Optische Dichten der Testtinten**

| | Viskosität Testtinte | Optische Dichte |
|---|---|---|
| Anwendungsbeispiel 1 | 2,9 mPas | 1,12 |
| Anwendungsbeispiel 2 | 2,4 mPas | 1,22 |
| Vergleichsbeispiel 1 | 4,9 mPas | 0,99 |
| Vergleichsbeispiel 2 | 4,3 mPas | 1,12 |

Die aus den Dispersionen der Anwendungsbeispiele 1 und 2 hergestellten Testtinten besitzen eine gegenüber den Vergleichsbeispielen 1 und 2 verbesserte, sehr niedrige Viskosität und zeigen ein sehr gutes Druckverhalten. Insbesondere ergeben sich eine hohe Zuverlässigkeit im Druckverlauf (sehr gutes Andruckverhalten, keine Düsenverstopfung) und ein sehr gleichmäßiges Druckbild von exzellenter Qualität auf den verschiedenen verwendeten Papieren. Drucke der gemäß der Anwendungsbeispiele 1 und 2 hergestellten Testtinten auf unbeschichtetem Papier (plain paper) zeigen gegenüber den Testtinten der Vergleichsbeispiele 1 und 2 eine höhere optische Dichte. Zudem weisen die Drucke der Anwendungsbeispiele 1 und 2 im Gegensatz zu denen der Vergleichsbeispiele 1 und 2 ein streifenfreies Druckbild auf. Die gemäß den Anwendungsbeispielen 1 und 2 hergestellten Testtinten erfüllen somit die im Ink-Jet-Druck gestellten Anforderungen in ausgezeichneter Weise.

## Patentansprüche

1. Verfahren zur Verkapselung von Pigmentpartikeln, **gekennzeichnet durch**
(A) die Herstellung einer Dispersion des zu verkapselnden Pigments,
(B) die nachfolgende Aufbringung einer Polyelektrolytschicht auf die Oberfläche der Pigmentpartikel,
(C) die weitere Aufbringung einer zu (B) gegensätzlich geladenen Polyelektrolytschicht und/oder der Zugabe von zu (B) gegensätzlich geladenen niedermolekularen, mehrwertigen Ionen und
(D) gegebenenfalls die Wiederholung der Schritte (B) und (C),
wobei die Schritte (B), (C) und gegebenenfalls (D) in Gegenwart eines nichtionischen Tensids durchgeführt werden.

2. Verfahren nach Anspruch 1, **dadurch gekennzeichnet, dass** mindestens zwei Polyelektrolytschichten entgegengesetzter Ladung aufgebracht werden.

3. Verfahren nach Anspruch 2, **dadurch gekennzeichnet, dass** die mindestens zwei Polyelektrolytschichten durch eine Layer-by-layer-Technik aufgebracht werden.

4. Verfahren nach Anspruch 2, **dadurch gekennzeichnet, dass** die mindestens zwei Polyelektrolytschichten nacheinander ohne Zwischenisolierung auf die Pigmentpartikel aufgebracht werden.

5. Verfahren nach mindestens einem der Ansprüche 1 bis 4, **dadurch gekennzeichnet, dass** die Aufbringung der Polyelektrolytschichten durch Präzipitation auf die Oberfläche der Pigmentpartikel erfolgt.

6. Verfahren nach Anspruch 5, **dadurch gekennzeichnet, dass** die Präzipitation durch Änderung der Polyelektrolytkonzentration und/oder des pH-Wertes erfolgt.

7. Ink-Jet-Tinte enthaltend als Farbmittel beschichtete Partikel mit einem Kern, der ein organisches Pigment mit einer mittleren Teilchengröße d₅₀ von unter 200 nm ist, und mindestens zwei Polyelektrolytschichten unterschiedlicher Ladung in einer Schichtdicke von jeweils 1 bis 150 nm, **dadurch gekennzeichnet, dass** das organische Pigment ein Pigment aus der Gruppe C.I. Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34, Pigment Brown 41; Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38, Pigment Brown 1; Pigment Red 48:2, Pigment Red 48:3, Pigment Red 48:4, Pigment Red 57:1, Pigment Red 257, Pigment Orange 68, Pigment Orange 70; Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72, Pigment Brown 25; Pigment Yellow 139, Pigment Yellow 173; Pigment Blue 15, Pigment Blue 15:1, Pigment Blue 15:2, Pigment Blue 15:3, Pigment Blue 16, Pigment Green 7, Pigment Green 36; Pigment Yellow 196, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23, Pigment Blue 80, Pigment Orange 43; Pigment Red 169, Pigment Blue 56, Pigment Blue 61; Pigment Red 254 ist.

## Claims

1. A process for encapsulating pigment particles, which comprises
(A) producing a dispersion of the pigment to be encapsulated,
(B) then applying a polyelectrolyte layer to the surface of the pigment particles,
(C) further applying a polyelectrolyte layer having opposite charge to (B), and/or adding low molecular weight, multivalent ions oppositely charged to (B), and
(D) if appropriate repeating steps (B) and (C),
said steps (B), (C) and if appropriate (D) being carried out in the presence of a nonionic surfactant.

2. The process as claimed in claim 1 wherein at least two polyelectrolyte layers of opposite charge are applied.

3. The process as claimed in claim 2 wherein the at least two polyelectrolyte layers are applied by a layer-by-layer technique.

4. The process as claimed in claim 2 wherein the at least two polyelectrolyte layers are applied to the pigment particles in succession without intervening isolation.

5. The process as claimed in at least one of the claims 1 to 4 wherein the polyelectrolyte layers are applied by precipitation onto the surface of the pigment particles.

6. The process as claimed in claim 5 wherein the precipitation is effected by changing the polyelectrolyte concentration and/or the pH.

7. An ink jet ink comprising as colorant coated particles having a core which is an organic pigment having a median particle size d₅₀ of below 200 nm, and at least two polyelectrolyte layers of differing charge in a layer thickness of 1 to 150 nm each, wherein the organic pigment is a pigment from the C.I. group consisting of Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34, Pigment Brown 41; Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38, Pigment Brown 1; Pigment Red 48:2, Pigment Red 48:3, Pigment Red 48:4, Pigment Red 57:1, Pigment Red 257, Pigment Orange 68, Pigment Orange 70; Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72, Pigment Brown 25; Pigment Yellow 139, Pigment Yellow 173; Pigment Blue 15, Pigment Blue 15:1, Pigment Blue 15:2, Pigment Blue 15:3, Pigment Blue 16, Pigment Green 7, Pigment Green 36; Pigment Yellow 196, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23, Pigment Blue 80, Pigment Orange 43; Pigment Red 169, Pigment Blue 56, Pigment Blue 61; Pigment Red 254.

## Revendications

1. Procédé pour l'encapsulation de particules pigmentaires, **caractérisé par**
(A) la préparation d'une dispersion du pigment à encapsuler,
(B) l'application consécutive d'une couche polyélectrolytique sur la surface des particules pigmentaires,
(C) l'application ultérieure d'une couche polyélectrolytique portant une charge opposée à (B) et/ou l'addition d'ions polyvalents de bas poids moléculaire de charge opposée à (B) et
(D) le cas échéant répétition des étapes (B) et (C),
où les étapes (B), (C) et le cas échéant (D) sont réalisées en présence d'un agent tensioactif non ionique.

2. Procédé selon la revendication 1, **caractérisé en ce qu'**on applique au moins deux couches polyélectrolytiques de charge opposée.

3. Procédé selon la revendication 2, **caractérisé en ce que** lesdites au moins deux couches polyélectrolytiques sont appliquées par une technique couche par couche ("Layer-by-Layer").

4. Procédé selon la revendication 2, **caractérisé en ce que** lesdites au moins deux couches polyélectrolytiques sont appliquées consécutivement sans isolement intermédiaire sur les particules pigmentaires.

5. Procédé selon au moins l'une quelconque des revendications 1 à 4, **caractérisé en ce que** l'application des couches polyélectrolytiques est réalisée par précipitation sur la surface des particules pigmentaires.

6. Procédé selon la revendication 5, **caractérisé en ce que** la précipitation est réalisée par modification de la concentration en polyélectrolyte et/ou du pH.

7. Encres pour jet d'encre contenant comme colorant des particules revêtues avec un noyau, qui est un pigment organique présentant une grosseur moyenne de particules d₅₀ inférieure à 200 nm, et au moins deux couches polyélectrolytiques de charge différente en une épaisseur de couche à chaque fois de 1 à 150 nm, **caractérisées en ce que** le pigment organique est un pigment organique du groupe C.I. Pigment Yellow 1, Pigment Yellow 3, Pigment Yellow 12, Pigment Yellow 13, Pigment Yellow 14, Pigment Yellow 16, Pigment Yellow 17, Pigment Yellow 73, Pigment Yellow 74, Pigment Yellow 81, Pigment Yellow 83, Pigment Yellow 87, Pigment Yellow 97, Pigment Yellow 111, Pigment Yellow 126, Pigment Yellow 127, Pigment Yellow 128, Pigment Yellow 155, Pigment Yellow 174, Pigment Yellow 176, Pigment Yellow 191, Pigment Red 38, Pigment Red 144, Pigment Red 214, Pigment Red 242, Pigment Red 262, Pigment Red 266, Pigment Red 269, Pigment Red 274, Pigment Orange 13, Pigment Orange 34, Pigment Brown 41 ; Pigment Red 2, Pigment Red 3, Pigment Red 4, Pigment Red 5, Pigment Red 9, Pigment Red 12, Pigment Red 14, Pigment Red 53:1, Pigment Red 112, Pigment Red 146, Pigment Red 147, Pigment Red 170, Pigment Red 184, Pigment Red 187, Pigment Red 188, Pigment Red 210, Pigment Red 247, Pigment Red 253, Pigment Red 256, Pigment Orange 5, Pigment Orange 38, Pigment Brown 1 ; Pigment Red 48:2, Pigment Red 48:3, Pigment Red 48:4, Pigment Red 57:1, Pigment Red 257, Pigment Orange 68, Pigment Orange 70 ; Pigment Yellow 120, Pigment Yellow 151, Pigment Yellow 154, Pigment Yellow 175, Pigment Yellow 180, Pigment Yellow 181, Pigment Yellow 194, Pigment Red 175, Pigment Red 176, Pigment Red 185, Pigment Red 208, Pigment Violet 32, Pigment Orange 36, Pigment Orange 62, Pigment Orange 72, Pigment Brown 25 ; Pigment Yellow 139, Pigment Yellow 173 ; Pigment Blue 15, Pigment Blue 15:1, Pigment Blue 15:2, Pigment Blue 15:3, Pigment Blue 16, Pigment Green 7, Pigment Green 36 ; Pigment Yellow 196, Pigment Red 149, Pigment Red 168, Pigment Red 177, Pigment Red 179, Pigment Red 181, Pigment Red 207, Pigment Red 209, Pigment Red 263, Pigment Blue 60, Pigment Violet 19, Pigment Violet 23, Pigment Blue 80, Pigment Orange 43 ; Pigment Red 169, Pigment Blue 56, Pigment Blue 61 ; Pigment Red 254.
